Europäisches Patentamt

European Patent Office

Office européen des brevets

(19)

(11) **EP 0 565 790 B1**

(12) **EUROPEAN PATENT SPECIFICATION**

(45) Date of publication and mention
of the grant of the patent:
**06.11.1996 Bulletin 1996/45**

(51) Int Cl.[6]: **C25B 1/02**, B01D 53/32,
C01B 13/02

(21) Application number: **92303453.2**

(22) Date of filing: **16.04.1992**

(54) **Oxygen concentrator utilizing electrochemical cell**

Sauerstoffanreichungsgerät mit Verwendung einer elektrochemischen Zelle

Système de concentration d'oxygène utilisant une cellule électrochimique

(84) Designated Contracting States:
**DE FR GB SE**

(43) Date of publication of application:
**20.10.1993 Bulletin 1993/42**

(73) Proprietor: **INVACARE CORPORATION**
**Elyria, Ohio 44036 (US)**

(72) Inventor: **Michaels, Gregory A.**
**Seven Hills, Ohio 44131 (US)**

(74) Representative: **Cook, Anthony John et al**
**D. YOUNG & CO.**
**21 New Fetter Lane**
**London EC4A 1DA (GB)**

(56) References cited:
**EP-A- 0 443 259**   **EP-A- 0 510 877**
**WO-A-91/06691**   **US-A- 4 725 346**
**US-E- 28 792**

Printed by Jouve, 75001 PARIS (FR)

## Description

This invention relates to an oxygen generation system for producing oxygen from air. It has particular application to the separation of oxygen from air to supplement an otherwise deficient condition, such as when a patient in a hospital is unable to breathe properly or where the ambient atmosphere is deficient in oxygen, such as at high altitudes.

In hospitals, nursing homes, private homes, and other locations in which sick or elderly patients are cared for, or in aircraft ravelling at high altitudes, a source of pure or high-concentration oxygen is often necessary to assist in the breathing process. Because sick or elderly patients are sometimes unable to draw enough air into their lungs, the patient's breathing process is supplemented by the addition of pure oxygen. Because air is only 21% oxygen, the provision of pure or nearly pure oxygen greatly reduces the effort required on the part of the patient to acquire the requisite oxygen for life.

In the past, such oxygen has been supplemented through the use of pressurized tanks and/or liquid oxygen systems. While the tanks have been suitable for their intended purpose, they require pick-up, refilling, and delivery when the initial supply is depleted. In some environments, they also pose a fire hazard.

Some devices have been developed to separate, concentrate, or generate oxygen from ambient air. Many of these devices are based on nitrogen adsorption systems which concentrate oxygen from air to deliver a maximum of 95% $O_2$ by removing nitrogen from ambient air. U.S. Patent No 4 449 990 describes one such apparatus. Such devices require a parasitical purging of one tank by pure oxygen from another tank in order to maintain effectiveness. Further, moisture can be damaging to the nitrogen adsorption material.

To overcome the foregoing deficiencies in the art, applicant saw a need for a light-weight, quiet, inexpensive device which could generate pure oxygen from ambient air in quantities small enough to be cost effective for single patient use.

According to one aspect of the invention there is provided an oxygen concentration system for producing oxygen from air comprising:

an electrochemical oxygen generator having an outer surface and able to extract oxygen from air by means of an electrochemical reaction;

an inner housing having inner, outer, base, and top surfaces, the generator being mounted within the inner housing so that a first passageway is created between the inner surface of the inner housing and the outer surface of the generator, the first passageway having a first inlet near the base surface of the inner housing and having a first outlet near the top surface of the inner housing, the first passageway being operative to pass air entering the first inlet to the first outlet by means of convection.

Preferably, the inner housing is mounted within an outer housing. The outer housing has an inner, an outer, a base, and a top surface. The inner housing is mounted within the outer housing so that a second passageway is created between the inner surface of the outer housing and the outer surface of the inner housing.

Advantageously, a transition passageway having a third inlet and a third outlet connects the first passageway and the second passageway, so that air exiting the second passageway enters the transition passageway and eventually enters the first passageway.

Preferably, a reflective shield is mounted above and below the inner housing and is suitable for reflecting infrared radiation back into the inner housing.

Advantageously, a cap is attached to the top of the outer housing and is effective to create a first mixing zone within the cap. The mixing zone receives cooler air entering the cap as well as warmer air exiting the first passageway and mixes the air, allowing transfer of heat from the warm air to the cold.

Preferably, the generator is capable of generating oxygen from air upon the application of an electrical current. The generator comprises a plurality of adjacent electrochemical cells electrically connected in series, although other embodiments can be connected in parallel. Each cell contains an inner, porous oxygen electrode. A dense solid oxide electrolyte capable of transporting oxygen ions is partly disposed on top of the inner electrode and partly disposed between the inner electrodes of the adjacent cells. An outer, porous air electrode is disposed on top of the electrolyte. Separate, dense, electronically conductive segments of inner connection material are disposed between adjacent cells. The inner connection electronically and physically connects the outer air electrode from one cell to the inner oxygen electrode from an adjacent cell. The oxygen generator has gas impermeable, dense, contacting segments of electrolyte and inner connection material between inner electrodes of adjacent cells.

According to another aspect of the invention, there is provided apparatus for extracting oxygen from air comprising:

an outer cylinder having an inner and an outer surface;

an inner cylinder fitting concentrically within the outer cylinder the inner cylinder having an inner and an outer surface, the outer surface of the inner cylinder being spaced from the inner surface of the outer cylinder, the equidistant spacing creating an outer air gap between the outer and inner cylinders; and

a tubular oxygen extraction means fitting concentrically within the inner cylinder so that an inner air gap is formed between the inner cylinder and the extraction means, the extraction means generating heat via the application of electric current, the heat generation being effective to raise the temperature of air in the inner air gap and causing it to rise due to the force of convection.

One possible advantage of the present invention is its light weight. It lacks heavy tanks needing to be refilled as well as the extra weight associated with nitrogen adsorption devices.

Another possible advantage is the preheating of the air before it interacts with the oxygen generator. As discussed later, advantages are obtained by preheating incoming ambient air.

Another possible advantage is the elimination of the need for heavy insulation, such as is commonly used in other oxygen generation systems. The heavy insulation such as is commonly used in other high temperature systems because of the high temperatures associated with the oxygen generation process. The present invention avoids the need for such insulation by mixing warmer outgoing air with large amounts of cooler ambient air.

Another possible advantage is that the device is made of inexpensive material, such as sheet metal.

Another possible advantage of the current invention is the quiet way in which it operates. The preferred embodiment features two small blowers, although it is believed the invention can successfully be practiced with no moving parts at all.

Another possible advantage of the current invention is the pure oxygen obtainable from the process. Rather than concentrated oxygen, the output is essentially pure oxygen.

Another possible advantage of the present invention is the energy efficient way in which it operates, drawing on natural phenomena such as convection to move air past the electrochemical cell.

Still other benefits and advantages of the invention will become apparent to those skilled in the art upon a reading and understanding of the following detailed specification.

The invention may take physical form in certain parts and arrangement of parts, a preferred embodiment of which will be described in detail in the specification and illustrated in the accompanying drawings, which form a part hereof, and wherein:

Figure 1 is a plan view, partially in section, of one embodiment of a tubular, stepped, stacked, oxygen generator used for use in an oxygen generation system according to the invention, showing the cell configuration, end seal portions, power contracting connections, and source of air;

Figure 2 shows another embodiment of oxygen generator used for use in an oxygen generation system according to the invention, in plan view partially in section;

Figure 3 is a top cross-sectional view of an oxygen generation system according to the invention;

Figure 4 is a front elevational cross-sectional view of the oxygen generation system of Figure 3; and

Figure 5 is a front, elevational view in partial cross-section of another embodiment of an oxygen generation system according to the invention.

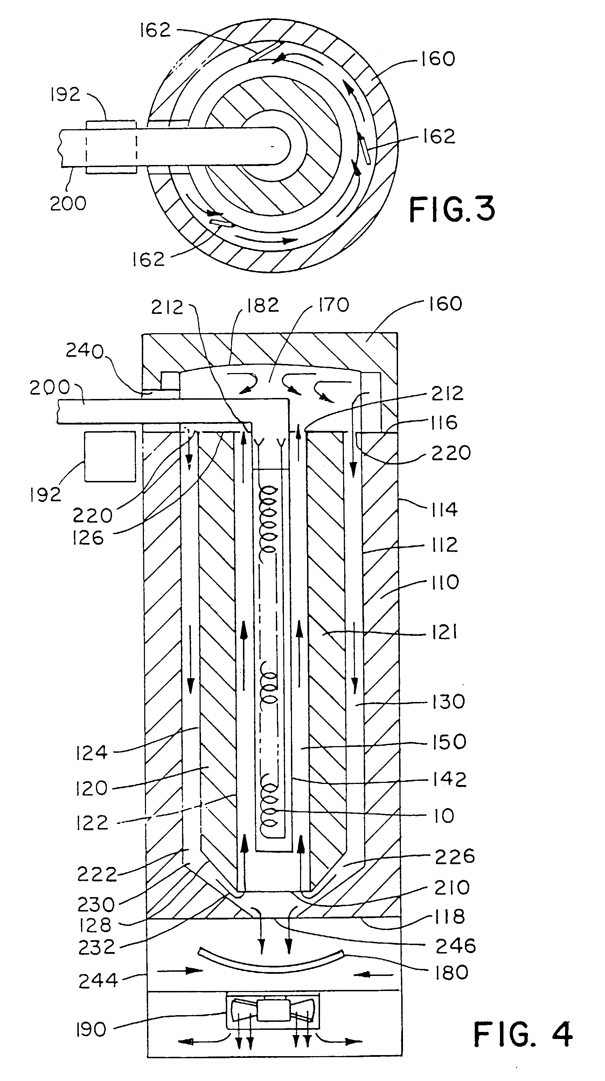

Referring now to the drawings, wherein the showings are for purposes of illustrating a preferred embodiment of the invention only, and not for purposes of limiting same, Figure 4 shows a front elevational cross-sectional view of an oxygen generation system.

An outer housing 110 has an inner surface 112, an outer surface 114, a top surface 116, and a base surface 118.

Similarly, an inner housing **120** has an inner surface **122**, an outer surface **124**, a top surface **126**, and a base surface **128**.

In the preferred embodiment, both the outer housing **110** and the inner housing **120** are cylindrical, taking the form of an annulus. The inner housing **120** is mounted concentrically within the outer housing **110**.

Mounted concentrically within the inner housing **120** is an electrochemical oxygen generator **10**. The operation of this oxygen generator will be discussed in more detail later in this specification. A first passageway **150** is formed between the inner surface **122** of the inner housing **120** and the outer surface **142** of the generator **10**. A second air passageway **130** is formed between the outer surface **124** of the inner housing **120** and the inner surface **112** of the outer housing **110**.

A cap **160** is attached to the top surface **116** of the outer housing **110**. The cap **160** forms a mixing zone **170** above the first and second passageways **150**, **130**. With reference to FIGURE 3, the cap **160** has a plurality of fins **162** mounted to its inner periphery. The operation of these fins **162** will be described below.

With reference to FIGURE 4, infrared shields **180**, **182** are mounted above and below the first and second passageways **150**, **130** and are effective to reflect infrared radiation emanating from the generator **10** back into the generation system. In the preferred embodiment, these shields are parabolic. The interior surface of the cap **160** is coated with a reflective material and is curved to form reflective shield **182**. The cap **160** is also insulated to retain heat.

A first and second blower **190**, **192** are utilized in the preferred embodiment of the invention and are schematically shown in FIGURE 4. The purpose and operation of these blowers will be discussed below.

Oxygen generated by the generation system is removed from the device via discharge tube **200**. Because the oxygen is generated at a pressure above atmospheric pressure, the oxygen flows out of discharge tube **200** without the need for a blower or pump.

The operation of the device will now be explained. One of the primary objectives of the device is to provide a steady stream of air to the generator **10** in such quantities so as to insure a sufficient production of oxygen from the generator **10**. Also, this air must be supplied with a minimum amount of noise generated or energy expended. Preferably, the air is preheated before it reaches the generator **10**. The device utilizes several air passageways, with their associated inlets and outlets, to accomplish these objectives. For purposes of illustration, the outlets will be designated as follows. A first inlet **210** of the first passageway **150** is located near the base surface **128** of the inner housing **120**. Correspondingly, a first outlet **212** of the first passageway **150** is located near the top surface **126** of the inner housing **120**.

A second inlet **220** of the second passageway **130** is located near the top surface **116** of the outer housing **110**. Correspondingly, a second outlet **222** of the second passageway **130** is located near the base surface **118** of the outer housing **110**. In the preferred embodiment, the lower portions of the second passageway **130** are angled inwardly so as to reduce losses due to friction within the second passageway **130**. In this embodiment, by angling the lower portions of the second passageway **130** in this way, an additional transition passageway **226** is formed. In this embodiment, the transition passageway **226** begins with a third inlet **230** and terminates with a third outlet **232**. The third inlet **230** of the transition passageway **226** cooperates with the second outlet **222** of the second passageway **130** and the third outlet **232** of the transition passageway **226** cooperates with the first inlet **210** of the first passageway **150** so that air exiting the second passageway **130** enters the transition passageway **226**. A fourth inlet **240** is located in the cap **160**.

Air flow under operating conditions is as follows. With continuing reference to FIGURES 3 and 4, the second blower **192** introduces ambient air into the fourth inlet **240** of the cap **160**. The air is introduced tangentially to contribute to a circular, swirling condition in the mixing zone **170** inside the cap **160**. Fins **162** contribute to this circular air flow. The direction of air flow is shown in FIGURE 3.

Because the generator **10** operates at high temperature, air in the first passageway **150** is warmer than air in other places throughout the device. As such, air exiting the first outlet **212** tends to be warmer than air entering the mixing zone **170** at the fourth inlet **240**. The cooler air entering the mixing zone **170** at the fourth inlet **240** tends to drop downwardly through the second inlet **220** of the second passageway **130**. The air travels downwardly through the second passageway **130**, out the second outlet **222**, and into the transition passageway **226**. After exiting the transition passageway **226**, the air tends to be drawn into first inlet **210** of the first passageway **150**. While in the first passageway **150**, the air travels longitudinally along the outer surface **142** of the generator **10**. While the air travels along the longitudinal length of the generator **10**, some air is processed by the generator via an electrochemical reaction which will be discussed in more detail later in the specification. All of the air is heated while in the first passageway **150** and its temperature rises significantly. Above the first passageway **150** in the mixing zone **170**, a vortex is formed due to the swirling effect of second blower **192**, fins **162**, and the tangential direction of the air flow. The center of the vortex is a point of low pressure, due to the thermodynamic and fluid flow aspects of a vortex. This point of low pressure is centered over the first outlet **212** of the first passageway **150**. As such, the area of low pressure tends to pull air from within the first passageway **150** to the mixing zone **170**.

This vortex is one of two non-mechanical mechanisms which help air circulate within the system. A second is thermal convection currents. Pressure is created by cooler, dense air in the second passageway **130** accumulating near the first inlet **210** of the first passageway **150**. This cooler air exiting the transition passageway **226** tends to accumulate at the first inlet **210** of the first passageway **150**. This cooler air, being more dense than the warmer air, tends to fall downwardly within the second passageway **130** and displace warmer air near the first inlet **210**. This displaced warmer air rises, bringing it into closer association with the generator **10**. This closer association raises the temperature of the air even higher, causing it to become less dense and to rise even faster. The warmer air rises due to the principle of convection. By these mechanisms, air is circulated through the device with a minimum of electrical power expended and noise generated.

The air flow generated by the second blower **192** can be adjusted during start up to assist in heating up the device to operating temperatures. At relatively low air flow rates, the second blower **192** is effective to introduce ambient air into the fourth inlet **240** of the cap **160**. The air is introduced tangentially and is directed by the fins **162** to the second inlet **220** of the second passageway **130**. As discussed above, the air in the second passageway tends to drop downwardly due to its relatively high density to the warmer air rising upwardly in the first passageway **150**. At this current level supplied to the second blower **192**, air in the second passageway **130** drops downwardly while air in the first passageway **150** travels upwardly.

If the air flow rate of the second blower **192** is adjusted upwardly, a condition results where the positive pressure within the cap **160** generated by the blower **192** is approximately equal to the convection forces present in the first passageway **150**. At this condition, air flow within the first passageway **150** stops and the temperature of the generator **10** rises. This electrical current level to the second blower **192** can be useful in bringing the device up to operating temperatures quickly.

If the airflow rate of the second blower **192** is increased still further, the positive pressure created by the second blower **192** within the cap **160** overcomes the forces of convection and air travels downwardly in both the second passageway **130** and the first passageway **150**. In this condition, the temperature of the generator **10** drops, since it is being bathed by cooler incoming air.

The outer housing **110** is supported by a support **244**. Mounted within the support **244** is an infrared shield **180**. The infrared shield **180** is positioned beneath the inner housing **120** and the opening **246** in the outer housing **110**. Because the generator **10** operates at high temperature, a significant amount of infrared radiation emanates from the opening **246** in the base of the outer housing **110** and from the inner surface **122** of the inner housing **120**. Allowing this radiation to escape would be a waste of energy and could create uncomfortable conditions in the environment, for example, if the device was mounted near a hospital bed. The infrared shield **180** is effective to reflect infrared radiation emanating from generator **10** back into opening **246**. This process saves energy and makes the ambient environment more comfortable for the patient by keeping the heat within the device.

Similarly, as discussed above, the inner surface of the cap **160** is curved and coated with a reflective material to act as an infrared shield **182** to reflect infrared radiation emanating from the top of the generator **10**.

Also mounted within the support **244** is a first blower **190**. The first blower mixes a large amount of ambient cool air with warmer air escaping from opening **246** in the outer housing **110**. This mixing dramatically lowers the temperature of the air escaping from opening **246**.

Efficiently utilizing the heat generated by the generator **10** is a design goal for many of the features of the device. In addition to the infrared shield **180** already discussed, it is noteworthy that discharge tube **200** is fed back through the fourth outlet **240**. The oxygen generated by generator **10** and discharged through discharge tube **200** is warm compared to the incoming air through second blower **192** and fourth inlet **240**. As such, the cooler incoming air is warmed by the hot oxygen being discharged through discharge tube **200**. This is effective in lowering the temperature of the oxygen for the patient's use as well as saving the energy present within the oxygen and transferring it to the incoming air.

Additionally, the interior of the inner and outer housing **120**, **110** is insulated with alumino silicate which is shown at **121**, **111**. In the preferred embodiment, the insulation has a reflective backing which holds the fibers together, as well as contributing to the efficiency of the device by reflecting infrared radiation back into the passageways **130**, **150**, **230**. The preferred insulation material is manufactured by the Carborundum Company under the trademark Fiberfrax (Registered in U.S.A.) HSA Systems.

Another important material related feature is the use of silver lead wires for electrical connections. Because the device operates at about 900° C., care must be taken to chose materials which will retain operational and dimensional stability at those temperatures. Silver melts at 961° C., and therefore can remain dimensionally stable at these operating temperatures. Another advantage is that silver will not oxidize. While gold and platinum will also work, silver is preferred for applications which operate at temperatures below its melting point because it is cheaper and is not subject to oxidation, as is platinum. Platinum, with a melting point of 1,769° C., is the preferred material at operating temperatures above the melting points of gold and silver.

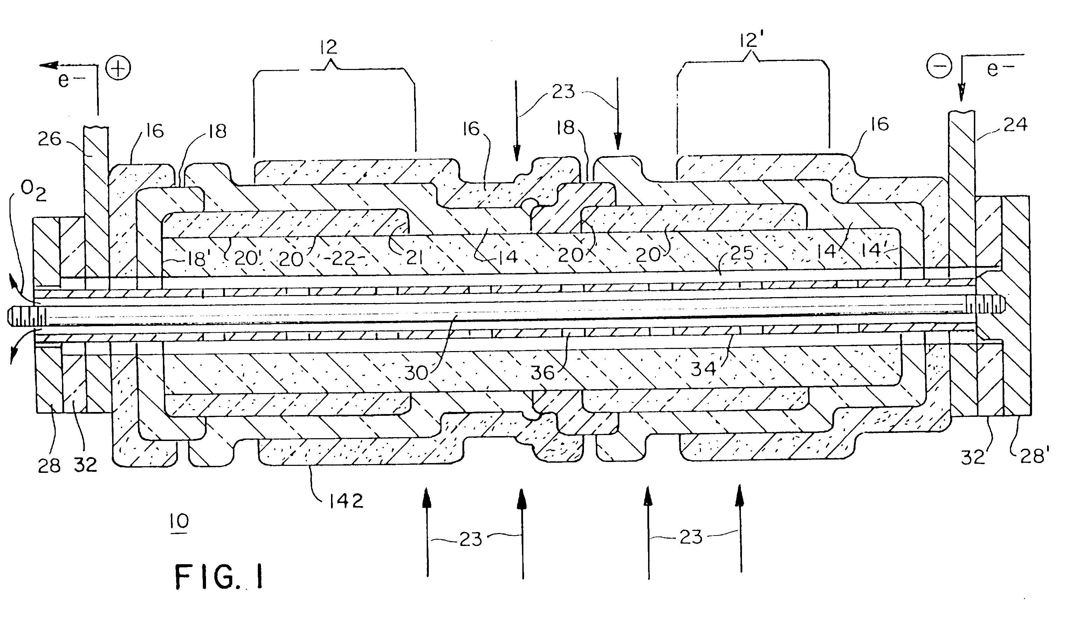

With reference to FIGURE 1, the operation of the electrochemical oxygen generator **10** will now be explained. In this explanation, the term "tubular" is meant to include any axially elongated structural form having a closed cross-section. The term "air electrode" means that electrode which contacts ambient air on the outside of the generator and allows formation of oxygen ions from oxygen in the air. The term "oxygen electrode" means that electrode which allows formation of oxygen gas from oxygen ions and allows passage of the oxygen gas into the interior of the generator. The term "dense" means at least 95% of the theoretical density.

The generator is driven by a DC power source. It operates at from 650° C. to 1,100° C. with preheated air which can be unpressurized. The generator is able to extract pure oxygen at the electrolyte surface at a rate proportional to the electric current.

Referring now to FIGURE 1 of the drawings, a high temperature electrochemical device **10** useful as an oxygen generator is shown, having a closed cross-section, preferred tubular form, and comprising a plurality of adjacent electrochemical cells, the active lengths of which are shown as first cell **12** and adjacent cell **12'**, arranged end to end. In the currently preferred embodiment, a single tubular oxygen generator is used. In other applications, such as some which require higher flow rates, a series of tubular oxygen generators can be placed within a single inner housing. In such cases, the currently preferred arrangement is a hexagonal array. The cells are electrically connected in series through continuous, spaced-apart solid oxide electrolyte bands or segments **14**, continuous, spaced-apart air electrode band **16**, continuous, spaced-apart interconnection segments **18**, and continuous, spaced-apart oxygen electrode bands **20**.

Optional, porous support **22**, which is preferably from 20% to 40% porous (80% to 60% of theoretical density), and which is generally used, as shown, supports oxygen electrodes **20** in the rest of the structure. Dense, solid electrolyte **14** is disposed on top of part of the inner oxygen electrode **20** starting a predetermined length from a first end **20'** of each oxygen electrode. Outer porous air electrode **16** is disposed on top of part of the electrolyte **14** and in contact with air **23** which surrounds the generator body **10**.

Electrical connection from cell to cell is made by a stacked configuration, where dense, preferably 100% dense, gas impervious, electronically conductive inner-connection **18** is deposited over and contacts part of the uncovered portion of support **22** next to the oxygen electrode **20** from cell **12'** and overlaps a portion of that oxygen electrode. Dense, gas impervious, ionically conducting, solid electrolyte **14** from first cell **12** is deposited on top of the inner, oxygen electrode **20** from cell **12** continuing beyond the end **21** of the oxygen electrode and onto the remaining uncovered portion of support **22**, overlapping inter-connection **18** next to cell **12'** but not contacting the adjacent oxygen electrode band **20** of cell **12'**. The combination of electrolyte and inner-connection closes off the porosity in the underlying support and oxygen electrode. Both electrolyte and inner-connection material are disposed between inner electrodes of adjacent cells, and this is essential in this design to prevent gas leakage.

In the embodiment shown in FIGURE 1, the dense electrolyte **14** overlaps the dense inter-connection **18** between cells **12** and **12'** and overlaps the dense inter-connection **18** near the positive terminal **26**, which latter connection forms a dense end portion for that device. This overlapping produces a gas impermeable barrier between the outside and the inside of the device.

Air electrode **16** from cell **12** is deposited on top of the electrolyte **14** from cell **12** continuing until contacting the inter-connection **18** between cells **12** and **12'**. To prevent electrical shorting between cells, a gap region is maintained between the air electrode **16** of cell **12**, and the electrolyte **14** of cell **12'**. These coatings of materials can be laid down by any suitable application masking techniques, such as electrochemical vapor deposition, sputtering, powder sintering, plasma arc spraying, and the like. Electrochemical vapor deposition is a preferred method of depositing electrolyte and inter-connection materials, and reference may be made to U.S. Patent No. 4,609,562 (Isenberg, et al.) herein incorporated by reference for details on that process.

This generator device is capable of generating oxygen gas from air upon application of an electrical current. Electrons from a DC power source (not shown) are fed into a terminal **24** (negative terminal), preferably of round washer design having an extended bus bar contact area. The electrons pass through the air electrode **16** of cell **12'**, where oxygen in the air **23** which need not be pressurized, is reduced at the operating temperature of the generator, preferably 650° C. to 1,100° C., to provide oxygen ions $O^=$, which pass through the ionically conductive, electronically non-conducting (does not pass $e^-$) solid electrolyte **14**. The oxygen ions recombine to form pure $O_2$ gas at the oxygen electrode **20** and pass through the porous support **22** into the central chamber **25**. The reactions are:

$$\text{I.} \quad \text{Air electrode: } O_2(\text{in air}) + 4e^- \rightarrow 2(O^=)$$

$$\text{II.} \quad \text{Oxygen electrode: } 2(O^=) \rightarrow O_2 + 4e^-$$

$$\text{III.} \quad \text{Overall cell: } O_2(\text{in air}) \rightarrow O_2$$

As shown in FIGURE 1, electrons release in the oxygen electrode **20** from cell **12'**, pass through inter-connection **18** between cell **12** and cell **12'** into the air electrode **16** of cell **12**, where identical electrode reactions occur, with electrons generated in the oxygen electrode **20** from cell **12** finally passing to terminal **26** (positive terminal) of similar design as terminal **24**, through the adjacent interconnection **18** and air electrode **16**, and back to the DC power supply.

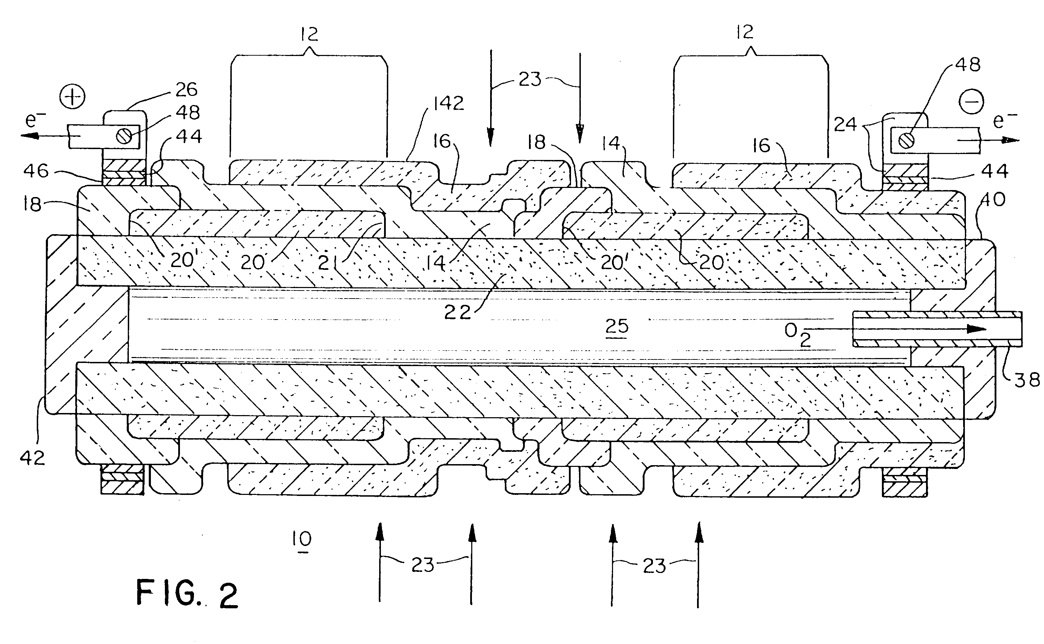

Thus, the tubular segment of inter-connection material between cells provides electrical continuity (allows a flow of electrons) from the outer air electrode from a first cell **12'** to the inner oxygen electrode of a second cell **12**, on the same device or tube, in a series arrangement. Also, air **23** is prevented from directly passing into the central chamber **25** by a continuous, dense, preferably 100% dense, barrier of electrolyte bands or segments **14** and inter-connect segments **18**. The dense electrolyte bands or segments, in part, overlap and seal to the dense inter-connection segments **18**. This air impermeability of the generator body is essential to providing high purity $O_2$, i.e. over approximately 95% pure, in the central chamber. While length **12** and **12'** define the "active" lengths of the two cells shown in FIGURE 1 and in FIGURE 2, electrode and electrolyte components shown extending out beyond the active length, are considered the active part from that particular cell. While the incoming air **23** does not have to be over atmospheric pressure, a great advantage in terms of the oxygen supply system, it may preheated consistent with the overall system design previously described prior to contact with the air electrodes **16** of the generator.

A variety of end closures or portions, preferably dense, can be used in the apparatus shown. In FIGURE 1, the dense inter-connection portion **18'**, near the positive terminal, and the dense electrolyte portion **14'**, near the negative terminal, are overlapped at the ends of the device and disposed transverse to the axial length of the device, as shown, to provide end closures. A high temperature resistant metal, central, axial rod, tube or the like **30**, of, for example, Inconel (nickel-chromium alloy), having threads at each end, can be use in conjunction with metal end sheets **28** and **28'**, to secure the sheets and the dense inter-connection and electrolyte portions in a compressed relationship. As shown, one end of the rod would be screwed into a mated thread, machined into the inner side of sheet **28'**, and the other end would be screwed down onto insulating rings **32** by an effective spring means (not shown), applying axial pressure to the end sheets, and assuring a gas tight fit against the flat metal terminals **24** and **26**. In a preferred embodiment, the generator **10** is preheatable by placing a voltage differential at the opposite ends of the axial rod **30**. In such embodiments, the rod **30** material is chosen to develop the desired heat at the desired current levels.

A suitable, high temperature resistant metal or ceramic tubular sleeve **34**, having a plurality of vents or holes **36** therethrough, suitably sealed to end sheet **28**, can provide oxygen delivery through the end closures **18'**, as shown by the $O_2$ arrows. Inconel and alumina would both be suitable as the sleeve **34**. In some instances, it may be desirable to have oxygen delivery though both ends. Alternatively, an additional hole can be drilled through end closure **18'**, and air electrode **16**, terminal **26** ceramic ring **32** and end sheet **28**, and a tube inserted for oxygen delivery, similar to **38** in FIGURE 2. This tube **38** can be made to cooperate with discharge tube **200** of FIGURES 3 and 4. The design of FIGURE 1 utilizes a substantial amount of metal hardware in contact with ceramic components. There, positive and negative terminals contact air electrode material at each end of the device. The design of FIGURE 2, while having more complicated terminal connections, can provide a primarily all-ceramic device, eliminating some possible problems of varying coefficients of thermal expansion between selected metals and ceramics.

In FIGURE 2, the cell structure and inter-connection between cells are essentially the same as the device of FIGURE 1, utilizing the same materials and substantially the same cell connection design. However, ceramic end portions or caps **40** and **42** are used in place of the end overlapping inter-connection **18'** and end overlapping electrolyte **14'** design of FIGURE 1. This use requires a sinter seal comprising very fine ceramic particles (not shown) between end portions or caps **40** and **42** and the ceramic support **22**. The ceramic end portions are preferably dense, to the degree of being gas impervious, and are preferably of the same material as the support tube. Preferably, the ceramic support tube **22**, in both embodiments, will be a zirconia material, such as stabilized zirconia, most preferably calcia-stabilized zirconia, for example $(ZrO_2)_{0.85}(CaO)_{0.15}$. This material, is pressed and highly densified form, is preferably also used as the ceramic end portions or caps **40** and **42** in FIGURE 2.

Preferably, a seal (end portion or cap to support tube) is produced by squeezing in a preformulated paste of very fine particle size calcia stabilized zirconia into the gap region when the end portions or caps are inserted. The ceramic end seal assembly is then dried and sintered in place, to complete fabrication. The narrow gap of the joint, the long, tortuous path, and the near-ambient pressure during operation of the device will all contribute to minimize leakage of any air into the central chamber **25** so that high purity $O_2$ can be provided. A minor amount of sintering aid, such as FeO for example, can be used in the adhesive paste and can also be used in both the support tube and end caps. Other suitable ceramic materials can also be used for the support tube, and the end caps which overlap the end of support tube **22**.

While the device of FIGURE 1 relies primarily on a pressure seal between overlapping end inter-connection material **18'**, overlapping end electrolyte material **14'**, contacting metal terminals **24** or **26**, ceramic spacers **32**, and metal sheets **28** and **28'**, any useful high temperature adhesive can also be used between those components to assure minimal air permeation into central chamber **25**.

The terminal connections on the device of FIGURE 1 are of simple round washer design, having an extending bus bar contact area secured by pressure tightening rod **30**, where the terminals **24** and **26** are preferably silver (m.p. 961°C), but can also be platinum (m.p. 1,769), or palladium and alloys of palladium and platinum with silver, if the device is to be operated close to its 1,100°C maximum operating temperature.

In the device of FIGURE 2, terminal attachments are of circular band design, and directly electrically contact the top surface of the inter-connection material at one end and the air electrode material at the other end of the device, and require cushioning layers. The negative terminal **24** electrically contacts the air electrode **16**, preferably through a fiber metal ring **44**, preferably of silver-palladium fibers. A metallic split ring clamp constitutes the terminals **24** and **26**, which are shown partly in section. The terminals **24** and **26** are preferably silver-palladium alloy, but can also be solid nickel, preferably coated with silver-palladium alloy. Terminal **26** in the FIGURE 2 design electrically contact inter-connection material **18** and may require an additional fiber metal ring **46**, preferably of silver-palladium. Also shown in FIGURE 2 are bus bar, bolt, nut, lock washer assemblies **48**. Oxygen gas from the central chamber **25** shown in FIGURE 2 can be delivered through tube **38**, which is preferably of a ceramic such as calcia-stabilized zirconia, or by any other appropriate means at one or both ends.

Useful and approximate, non-limiting dimensions for both oxygen generator device designs are porous support tube: 44 mm inside diameter, 50 mm outside diameter by 450 mm long; porous oxygen electrode: 15 mm long by 1 mm thick; dense interconnection: 0.05 mm to 2 mm thick; dense electrolyte: 11 mm long by 0.05 mm thick; and porous air electrode: 15 mm long by 0.1 mm thick. The unit would be a single stack, having a multiplicity of series-connected cells each about 1.1 cm long having an area of approximately 18 $cm^2$. For sake of simplicity, the drawings are not shown to scale.

Useful porous support tube materials, preferably from 4 mm to 10 mm thick, have been previously discussed, The oxygen electrode **20**, preferably from 0.5 mm to 2 mm thick, is a 20% to 40% porous, sintered oxide material selected from doped and undoped oxides or mixtures of oxides in the pervoskite family, such as $CAMnO_3$, $LaNiO_3$, $LaCoO_3$, and preferably $LaMnO_3$, or other electronically conducting mixed oxides generally composed of rare earth oxides mixed with oxides of cobalt, nickel, copper, iron, chromium and manganese, and combinations of such oxides. Dopants when used are preferably selected from calcium, strontium, and magnesium, with strontium dopant preferred. The most preferred oxygen electrode is lanthanum manganite doped with strontium, for example $La_{0.9}Sr_{0.1}MnO_3$. The air electrode is preferably applied by dip slurry application and sintering.

The dense inter-connection material, **18**, can be selected from the group consisting of platinum-zirconia, palladium-zirconia, silver-palladium-zirconia, palladium, platinum, palladium-silver, doped lanthanum manganite, and doped lanthanum chromite. The preferred inter-connection material is selected from the group consisting of doped lanthanum manganite, palladium, platinum, and palladium-silver. Dopants for the lanthanum manganite or lanthanum chromite are selected from the group consisting of calcium, strontium, and magnesium, with strontium dopant preferred. The most preferred inter-connection is doped lanthanum manganite. The inter-connection material is gas impervious and near 100% dense. It can be applied by well known vapor deposition techniques, and is usually from 0.05 mm to 2 mm thick. Densification can be achieved by a variety of techniques besides vapor deposition, including vapor sputtering, plasma spray, flame spray, and the like. In some cases, the inter-connection, oxygen electrode, and air electrode can be the same material differing only in density and application technique, with the inter-connection being the high density component.

The dense electrolyte **14**, preferably from 0.02 mm to 0.15 mm thick, is a zirconia material, preferably at least 99% dense and most preferably 100% dense. The zirconia can be stabilized, that is, doped with a number of elements. Rare earth element stabilized zirconia, specifically yttria-stabilized zirconia is preferred, as it allows excellent oxygen ion mobility. A most preferred composition is $(ZrO_2)_{0.92}(Y_2O_3)_{0.08}$. Other mixed oxides can be used. The material must be effective to transfer ionic oxygen. It can be applied by chemical vapor deposition, plasma spray, flame spray, or sintering techniques.

The porous air electrode, **16**, preferably from 0.05 mm to 2 mm thick, is a 20% to 60% porous material selected from metal-ceramic materials selected from the group consisting of platinum-zirconia, palladium-zirconia, and silver-palladium-zirconia, or a porous, sintered oxide selected from the group consisting of doped lanthanum manganite and doped lanthanum chromite where the preferred dopants are calcium, strontium, and magnesium, with strontium dopant preferred. Palladium-zirconia is the most preferred air electrode material. The air electrode must be effective to allow reduction of $O_2$ in the air to oxygen ions.

The number of cells needed to provide a required volume of $O_2$ gas from air can be calculated for a given gas temperature. For a unit delivering 3 liters/minute of oxygen, delivered at 25° C., having cells of 18 $cm^2$ area, for a driving current density of 2A/$cm^2$ and a cell current of 36A(2A/$cm^2$ x 18 $cm^2$); oxygen production per cell would be approximately 36A/cell x 3.80 ml/A-min = 136.8 ml/min-cell. If a 3 liter/minute of $O_2$ at 25° C. are required, the number of cells needed would be 3000 ml $O_2$/min ÷ 136.8 ml $O_2$/min-cell = 22 cells/stack.

The device operates at 900°C. at a current density of 2 amperes/$cm^2$, with ambient, unpressurized air delivery to the device. The preferred embodiment oxygen generator **10** was manufactured by Westinghouse Electric Corporation.

The power dissipated as heat in the oxygen concentration system maintains the operating temperature. For example, in a system designed to deliver 3 liters/minute at 25° C. and atmospheric pressure, the power required to maintain 900° C. is about 500 watts. An oxygen concentration system sufficient to deliver this flow rate at these conditions would have 22 cells operating at 631 millivolts and 36 amperes/cell. The heat generated by such a system is 500 watts and the operating temperature will be maintained by the electrochemical production of oxygen.

One advantage to this oxygen generation system is its ability to generate oxygen at flow rates which are proportional to the electrical current supplied to the generator **10**. For example, if a flow rate of **1** liter/minute is desired, the oxygen generation system requires only **12** amperes be supplied to the generator **10**. The cell voltage is calculated by Ohms Law and will be 210 millivolts. The power dissipated in this case is only 55 watts. This is not enough heat to maintain the operating temperature and the generator **10** cannot operate correctly. The difference between the oxygen generation heat and the temperature maintenance heat must be made up by an additional heater.

One advantage of the preferred embodiment of the invention is the use of the Inconel closure rod **30** as a heat source. Electric current can be imposed on the rod **30** such that the rod dissipates the amount of heat required to maintain the operating temperature. The higher the oxygen flow rate, the lower the amount of heat required to be generated by the rod.

Another advantage of using the rod **30** to generate heat is the uniformity of the heating. High heating rates can be obtained upon the initial start up with the rod **30** centered inside the generator **10**. Because the system is symmetrical about an axis, stresses developed due to uneven heating are minimized.

Another advantage of the rod **30** and the cylindrical layout of the oxygen concentration system is the efficient use of heat. For example, if the heater were to be located outside the generator **10**, then a portion of the heat would be directed toward the generator **10** and the remainder would be dissipated away from the generator. Because the rod **30** passes through the center of the generator **10**, all of the heat generated by the rod **30** heats the generator **10**.

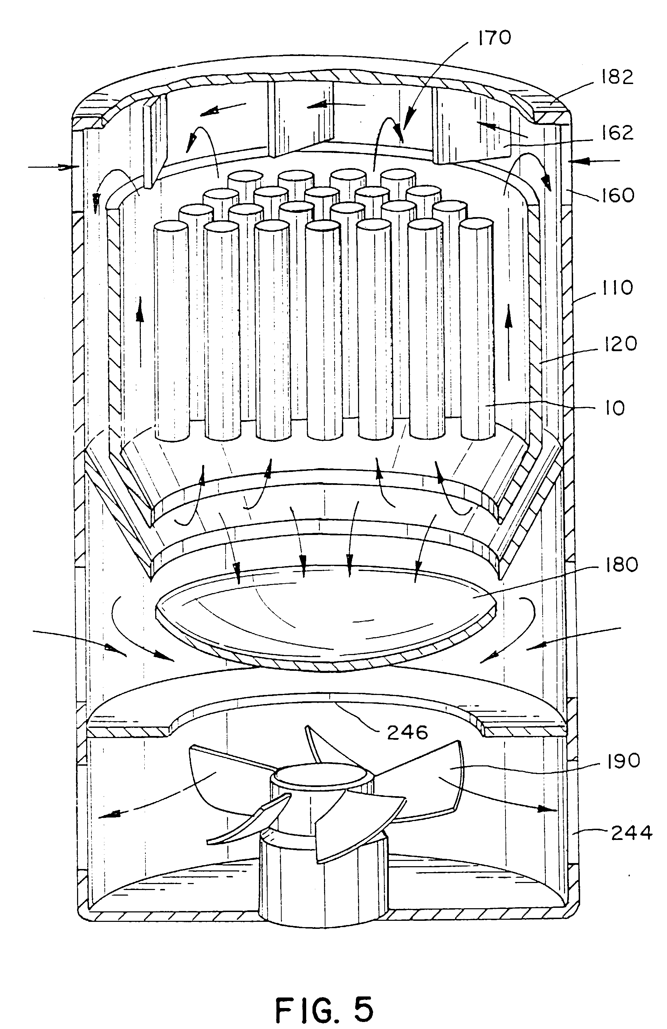

With reference to FIGURE 5, an embodiment utilizing a plurality of tubular generators **10** is shown. In some applications, due to oxygen flow rate demands or geometric constraints, a plurality of generators **10** is a preferred configuration. When a plurality of generators **10** are used, a preferred configuration of the generators is in the form of a hexagonal array.

The number of generators **10** in each array are determined by the oxygen production requirements of the system and by the following mathematical formula:

$$X = 1 + \sum_{n=1} 6(n-1)$$

where

X = total number of generators in array
N = number of generators along a radius of the array

A series of numbers which are solutions to the above equation are:
1, 7, 19, 37, 61, 91, 127, 169, 217, 271, ...

For example, in array featuring nineteen tubular generators **10**, the array would feature a single generator **10** in the center, surrounded by six generators **10**, which in turn are surrounded by twelve generators **10**. In the embodiments shown in FIGURE 5, N=4 and thirty-seven generators **10** are in the array.

The hexagonal configuration of the array is advantageous for minimizing the volume necessary to accommodate a certain number of generators **10**. The hexagonal shape permits a large number of generators **10** to be put into a small volume.

For example, the following chart shows how the hexagonal arrangement of the generators **10** allows for greatly increased oxygen production without a proportionate increase in volume required.

| Generator Diameter = | 2 inches | No. Cells = | 53 |
|---|---|---|---|
| Generator Voltage = | 37 volts | Cell Length = | 0.7 inches |
| Generator Current = | 36 amps | Cell Area = | 2.8 sq. in. |
| Generator Length = | 39 inches | | |
| System Height = | 60 inches | | |

| No. of Generators | Oxygen Delivery (1pm@RTP) | System Diameter (inches) | System Volume (cu. ft.) | System Weight (lbs) | Power required (kW) | Power Required (hp) |
|---|---|---|---|---|---|---|
| 1 | 7 | 8 | 2 | 41 | 1 | 2 |
| 7 | 50 | 11 | 3 | 56 | 9 | 12 |
| 19 | 137 | 16 | 7 | 139 | 25 | 34 |
| 37 | 268 | 21 | 12 | 263 | 49 | 66 |
| 61 | 442 | 26 | 18 | 628 | 81 | 109 |
| 91 | 659 | 31 | 26 | 628 | 121 | 163 |
| 127 | 921 | 36 | 35 | 870 | 170 | 227 |

To convert inches (in.) to millimetres, multiply by 2.54.
To convert square inches to square centimetres, multiply by 6.45.
To convert pounds (lbs.) to kilograms, multiply by 0.454.
To convert cu. ft. to cu. metres, multiply by 0.0283.
To convert horsepower (hp) to watts, multiply by 745.7.

The hexagonal configuration also aids in retaining heat within the inner housing **120**. Finally, the configuration provides for uniform heating of the generators **10** within the inner housing **120** via radiation.

The determination of the number of generators **10** necessary for a specific oxygen generation system requires an initial evaluation of the volume available for the generators **10**.

When a range of acceptable generator lengths is determined, the area of generators **10** can be determined by knowing the surface areas of individual cells within the generator **10**. In the preferred embodiment, each cell had an area of 18 cm$^2$, a driving current density of 2A/cm$^2$, and a cell current of 36A. The oxygen production would be (36A/cell)(3.80ml/A-min) = 136.8 ml $O_2$/min-cell. Multiplying this number by the number of cells per generator **10** yields the oxygen production of each generator **10**. By adjusting the number of cells per generator **10**, the number of generators can be adjusted to fit within the hexagonal array as described above.

The invention has been described with reference to a preferred embodiment. Obviously, modifications and alterations will occur to others upon a reading and understanding of this specification. It is intended to include all such modifications and alterations insofar as they come within the scope of the appended claims or the equivalents thereof.

## Claims

1. An oxygen concentration system for producing oxygen from air comprising:

   an electrochemical oxygen generator (10) having an outer surface (142) and able to extract oxygen from air by means of an electrochemical reaction;
   an inner housing (120) having inner (122), outer (124), base (128), and top (126) surfaces, the generator (10) being mounted within the inner housing (120) so that a first passageway (150) is created between the inner surface (122) of the inner housing (120) and the outer surface (142) of the generator (10), the first passageway (150) having a first inlet (210) near the base surface (128) of the inner housing (120) and having a first outlet (212) near the top surface (126) of the inner housing, the first passageway (150) being operative to pass air entering the first inlet (210) to the first outlet (212) by means of convection.

2. An oxygen concentration system according to claim 1, further comprising:
   an outer housing (110) having inner (112), outer (114), base (118), and top (116) surfaces, the inner housing (120) being mounted within the outer housing (110) so that a second passageway (130) is created between the inner surface (112) of the outer housing (110) and the outer surface (124) of the inner housing (120).

3. An oxygen concentration system according to claim 2, further comprising:

   a second inlet (220) near the top surface (116) of the outer housing (110); and
   a second outlet (222) near the base surface (118) of the outer housing (110), the second outlet (222) being cooperatively associated with the first inlet (210) of the inner housing (120) so that air exiting the outer housing (110) enters the first inlet (210) of the first passageway (150).

4. An oxygen concentration system according to claim 2, wherein air in the second passageway (130) of the outer housing (110) travels in an opposite direction to the air travelling in the first passageway (150) in the inner housing (120).

5. An oxygen concentration system according to claim 2, wherein air in the second passageway (130) of the outer housing (110) travels downwardly.

6. An oxygen concentration system according to claim 1, further comprising:
   a reflective shield (180) made of a material suitable to reflect infrared radiation emanating from the inner housing (120) back into the inner housing, the shield being mounted below the inner housing (120).

7. An oxygen concentration system according to claim 2, further comprising:
   a cap (160) having an interior (182) and an exterior surface, the cap (160) being attached to the top surface (116) of the outer housing (110), having a fourth inlet (240), and creating a first mixing zone (170), the first mixing zone (170) receiving air entering the fourth inlet (240) of the cap and air exiting the first outlet (212) of the passageway (150).

8. An oxygen concentration system according to claim 7, further comprising:
   a fin (162) attached to the interior surface (182) of the cap (160), the fin (162) being oriented to direct air entering the fourth inlet (240) into a circular pattern within the cap (160) so that a vortex is created.

9. An oxygen concentration system according to claim 7, wherein the interior surface (162) of the cap is made of a reflective material suitable to reflect infrared radiation back into the inner housing (120).

10. An oxygen concentration system according to claim 1 or claim 2, wherein the width of the second passageway (130) is between 12.5 mm and 100 mm (0.5 inches and 4 inches).

11. Apparatus for extracting oxygen from air comprising:

an outer cylinder (110) having an inner (112) and an outer (114) surface;
an inner cylinder (120) fitting concentrically within the outer cylinder (110), the inner cylinder (120) having an inner (122) and an outer surface (124), the outer surface (124) of the inner cylinder (120) being spaced from the inner surface (112) of the outer cylinder (110), the equidistant spacing creating an outer air gap (130) between the outer (110) and inner (120) cylinders; and
a tubular oxygen extraction means (10) fitting concentrically within the inner cylinder (120) so that an inner air gap (15) is formed between the inner cylinder (120) and the extraction means (10), the extraction means (10) generating heat via the application of electric current, the heat generation being effective to raise the temperature of air in the inner air gap (150) and causing it to rise due to the force of convection.

**Patentansprüche**

1. System zur Sauerstoffanreicherung zur Erzeugung von Sauerstoff aus Luft mit einem elektrochemischen Sauerstoffgenerator (10) mit einer Außenoberfläche (142) und der Fähigkeit, Sauerstoff aus Luft mit Hilfe einer elektrochemischen Reaktion zu extrahieren, und einem Innengehäuse (120) mit einer inneren (122), äußeren (124), unteren (128) und oberen (126) Oberfläche, wobei der Generator (10) in dem Innengehäuse (120) derart angeordnet ist, daß ein erster Durchgang (150) zwischen der inneren Oberfläche (122) des Innengehäuses (120) und der äußeren Oberfläche (142) des Generators (10) erzeugt wird, der erste Durchgang (150) einen ersten Einlaß (210) nahe der unteren Oberfläche (128) des Innengehäuses (120) hat und einen ersten Auslaß (212) nahe der oberen Oberfläche (126) des Innengehäuses hat und der erste Durchgang (150) so arbeitet, daß in den ersten Einlaß (210) eintretende Luft zu dem ersten Auslaß (212) mit Hilfe von Konvektion geht.

2. System zur Sauerstoffanreicherung nach Anspruch 1 weiterhin mit einem Außengehäuse (110) mit einer inneren (112), äußeren (114), unteren (118) und oberen (116) Oberfläche, wobei das Innengehäuse (120) in dem Außengehäuse (110) derart angeordnet ist, daß ein zweiter Durchgang (130) zwischen der inneren Oberfläche (112) des Außengehäuses (110) und der äußeren Oberfläche (124) des inneren Gehäuses (120) erzeugt wird.

3. System zur Sauerstoffanreicherung nach Anspruch 2 weiterhin mit einem zweiten Einlaß (220) nahe der oberen Oberfläche (116) des Außengehäuses (110) und einem zweiten Auslaß (222) nahe der unteren Oberfläche (118) des Außengehäuses (110), wobei der zweite Auslaß (222) wirkungsmäßig mit dem ersten Einlaß (210) des Innengehäuses (120) derart verbunden ist, daß das Außengehäuse (110) verlassende Luft in den ersten Einlaß (210) des ersten Durchganges (150) eintritt.

4. System zur Sauerstoffanreicherung nach Anspruch 2, bei dem Luft in dem zweiten Durchgang (130) des Außengehäuses (110) in einer entgegengesetzten Richtung zu der Luft wandert, die in dem ersten Durchgang (150) in dem Innengehäuse (120) wandert.

5. System zur Sauerstoffanreicherung nach Anspruch 2, bei dem Luft in dem zweiten Durchgang (130) des Außengehäuses (110) abwärts wandert.

6. System zur Sauerstoffanreicherung nach Anspruch 1 weiterhin mit einer reflektierenden Abschirmung (180), die aus einem Material besteht, welches geeignet ist, aus dem Innengehäuse (120) stammende Infrarotstrahlung zurück in das Innengehäuse zu reflektieren, wobei die Abschirmung unter dem Innengehäuse (120) angeordnet ist.

7. System zur Sauerstoffanreicherung nach Anspruch 2 weiterhin mit einer Abdeckung (160) mit einer inneren (182) und einer äußeren Oberfläche, wobei die Abdeckung (160) an der oberen Oberfläche (116) des Außengehäuses (110) befestigt ist, einen vierten Einlaß (240) hat und eine erste Mischzone (170) erzeugt, wobei die erste Mischzone (170) in den vierten Einlaß (240) der Abdeckung eintretende Luft und den ersten Auslaß (212) des Durchgangs (150) verlassende Luft aufnimmt.

**8.** System zur Sauerstoffanreicherung nach Anspruch 7 weiterhin mit einer Leitplatte (162), die an der inneren Oberfläche (182) der Abdeckung (160) befestigt ist, wobei die Leitplatte (162) so ausgerichtet ist, daß sie in den vierten Einlaß (240) eintretende Luft in der Abdeckung (160) kreisartig führt, so daß ein Wirbel erzeugt wird.

**9.** System zur Sauerstoffanreicherung nach Anspruch 7, bei dem die innere Oberfläche (162) der Abdeckung aus einem reflektierenden Material besteht, das geeignet ist, Infrarotstrahlung zurück in das Innengehäuse (120) zu reflektieren.

**10.** System zur Sauerstoffanreicherung nach Anspruch 1 oder Anspruch 2, bei dem die Breite des zweiten Durchganges (130) zwischen 12,5 und 100 mm (0,5 und 4 in) liegt.

**11.** Vorrichtung zum Extrahieren von Sauerstoff aus Luft mit einem Außenzylinder (110) mit einer inneren (112) und einer äußeren (114) Oberfläche, einem Innenzylinder (120), der konzentrisch in den Außenzylinder (110) paßt, wobei der Innenzylinder (120) eine innere (122) und eine äußere Oberfläche (124) hat, die äußere Oberfläche (124) des Innenzylinders (120) einen Abstand von der inneren Oberfläche (112) des Außenzylinders (110) hat und der äquidistante Abstand einen äußeren Luftspalt (130) zwischen dem Außenzylinder (110) und dem Innenzylinder (120) erzeugt und eine rohrförmige Sauerstoffextraktionseinrichtung (10) konzentrisch derart in den Innenzylinder (120) paßt, daß ein innerer Luftspalt (15) zwischen dem Innenzylinder (120) und der Extraktionseinrichtung (10) gebildet wird, wobei die Extraktionseinrichtung (10) Wärme mittels Anwendung elektrischen Stromes erzeugt, die Wärmeerzeugung wirksam ist, die Lufttemperatur in dem inneren Luftspalt (150) anzuheben, und diese Anhebung durch die Konvektionskraft hervorgerufen wird.

## Revendications

**1.** Système de concentration d'oxygène pour produire de l'oxygène à partir d'air, comprenant :

un générateur d'oxygène électrochimique (10) comportant une surface externe (142) et adapté à extraire l'oxygène de l'air au moyen d'une réaction électrochimique;
un boîtier interne (120) comportant des surfaces interne (122), externe (124), de base (128), et supérieure (126), le générateur (10) étant monté au sein du boîtier interne (120) de manière qu'un premier passage (150) soit créé entre la surface interne (122) du boîtier interne (120) et la surface externe (142) du générateur (10), le premier passage (150) comportant une première entrée (210) près de la surface de base (128) du boîtier interne (120) et comportant une première sortie (212) près de la surface supérieure (126) du boîtier interne, le premier passage (150) étant adapté à faire passer l'air pénétrant dans la première entrée (210) jusqu'à la première sortie (212) par convection.

**2.** Système de concentration d'oxygène selon la revendication 1, comprenant en outre :
un boîtier externe (110) comportant des surfaces interne (112), externe (114), de base (118), et supérieure (116), le boîtier interne (120) étant monté au sein du boîtier externe (110) de manière qu'un deuxième passage (130) soit créé entre la surface interne (112) du boîtier externe (110) et la surface externe (124) du boîtier interne (120).

**3.** Système de concentration d'oxygène selon la revendication 2, comprenant en outre :

une deuxième entrée (220) près de la surface supérieure (116) du boîtier externe (110); et
une deuxième sortie (222) près de la surface de base (118) du boîtier externe (110), la deuxième sortie (222) étant associée en fonctionnement avec la première entrée (210) du boîtier interne (120) de manière que l'air quittant le boîtier externe (110) pénètre dans la première entrée (210) du premier passage (150).

**4.** Système de concentration d'oxygène selon la revendication 2, dans lequel l'air dans le deuxième passage (130) du boîtier externe (110) se déplace dans une direction opposée à l'air circulant dans le premier passage (150) dans le boîtier interne (120).

**5.** Système de concentration d'oxygène selon la revendication 2, dans lequel l'air dans le deuxième passage (130) du boîtier externe (110) se déplace vers le bas.

**6.** Système de concentration d'oxygène selon la revendication 1, comprenant en outre :

un écran réfléchissant (180) fait d'un matériau adapté à renvoyer le rayonnement infrarouge émanant du boîtier interne (120) dans le boîtier interne, l'écran étant monté sous le boîtier interne (120).

7. Système de concentration d'oxygène selon la revendication 2, comprenant en outre :

un capuchon (160) comportant une surface interne (182) et externe, le capuchon (160) étant fixé à la surface supérieure (116) du boîtier externe (110), comportant une quatrième entrée (240), et créant une première zone de mélange (170), la première zone de mélange (170) recevant l'air pénétrant dans la quatrième entrée (240) du capuchon et l'air quittant la première sortie (212) du passage (150).

8. Système de concentration d'oxygène selon la revendication 7, comprenant en outre :

une ailette (162) fixée à la surface interne (182) du capuchon (160), l'ailette (162) étant orientée pour diriger l'air pénétrant dans la quatrième entrée (240) en une trajectoire circulaire au sein du capuchon (160) de manière qu'un tourbillon soit créé.

9. Système de concentration d'oxygène selon la revendication 7, dans lequel la surface interne (162) du capuchon est faite d'un matériau réfléchissant adapté à renvoyer le rayonnement infrarouge dans le boîtier interne (120).

10. Système de concentration d'oxygène selon la revendication 1 ou 2, dans lequel la largeur du deuxième passage (130) est comprise entre 12,5 mm et 100 mm (0,5 pouce et 4 pouces).

11. Appareil pour extraire l'oxygène de l'air comprenant :

un cylindre externe (110) comportant une surface interne (112) et une surface externe (114);
un cylindre interne (120) s'emboîtant de manière concentrique dans le cylindre externe (110), le cylindre interne (120) comportant une surface interne (122) et une surface externe (124), la surface externe (124) du cylindre interne (120) étant espacée de la surface interne (112) du cylindre externe (110), l'espacement équidistant créant un passage d'air externe (130) entre les cylindres externe (110) et interne (120); et
un moyen d'extraction d'oxygène tubulaire (10) s'emboîtant de manière concentrique dans le cylindre interne (120) de manière qu'un passage d'air interne (150) soit formé entre le cylindre interne (120) et le moyen d'extraction (10), le moyen d'extraction (10) produisant de la chaleur via l'application d'un courant électrique, la production de chaleur étant adaptée à augmenter la température de l'air dans le passage d'air interne (150) et à entraîner la montée de l'air par la force de la convection.

FIG. 1

EP 0 565 790 B1

FIG. 2

FIG.3

FIG. 4

FIG. 5